# EUROPÄISCHE PATENTANMELDUNG

(11) **EP 0 835 621 A2**
(43) Veröffentlichungstag der Anmeldung: **15.04.1998**
(21) Anmeldenummer: 97116630.1
(22) Anmeldetag: 24.09.1997
(51) Int. Cl.: A47D 5/00

(54) **Babyschale**

(30) Priorität: 08.10.1996 DE 29617492 U
(71) Anmelder: WANZL METALLWARENFABRIK GMBH, D-89336 Leipheim (DE)
(72) Erfinder: Kriz, Peter, 73230 Kirchheim/Teck (DE)

(57) **Zusammenfassung**

Die Erfindung betrifft eine Babyschale (1) mit einem Schalenkörper (2) und mit einer flexiblen Körperauflage (6), die mit Befestigungsmitteln lösbar mit dem Schalenkörper (2) verbunden ist. Es ist vorgesehen, daß die Befestigungsmittel durch wenigstens ein Klettverschlußstück (7) gebildet sind, wobei ein Teil (9) des Klettverschlußstücks (7) am Schalenkörper (2) und das andere Teil (8) an der Körperauflage (6) vorgesehen ist.

## Beschreibung

Die Erfindung betrifft eine Babyschale mit einem Schalenkörper und mit einer flexiblen Körperauflage, die mit Befestigungsmitteln lösbar mit dem Schalenkörper verbunden ist.

Es ist bekannt, bei Babyschalen die flexible Körperauflage so auszubilden, daß Randbereiche der Körperauflage die Randbereiche der Schalenkörper von innen nach außen umfassen, um der Körperauflage am Schalenkörper einen festen Halt zu geben. Es ist ferner bekannt, bei Sitzen die Körperauflage schnappschlüssig mit dem Sitzkörper zu verbinden. Bei dieser Art der Befestigung greifen an der Körperauflage vorgesehene Vorsprünge in am Sitzkörper befindliche Vertiefungen oder Durchbrüche ein und verrasten mit diesen. Diese Befestigungsmöglichkeiten haben ihre Vorteile bei ganz bestimmten Einsatzgebieten. So ist es logisch, daß bei einer aus Stoff bestehenden Körperauflage aus Kunsstoff bestehende und zum Verrasten bestimmte Vorsprünge dann als hinderlich empfunden werden können, wenn es gilt, die Körperauflage zu waschen. Ebenso wäre es schlecht, wenn man bei Sitzen, z.B. bei einem Schleppersitz, die Körperauflage am Sitzkörper unter Zuhilfenahme der Randbereiche so befestigen würde, wie dies eingangs beschrieben wurde. Die Körperauflage würde sich durch den rauhen Einsatz und durch die Bewegungen der Person sehr rasch vom Sitzkörper lösen.

Seit einigen Jahren kennt man Einkaufswagen, die mit einer oder mit zwei Babyschalen ausgestattet sind. Mit solchen Wagen soll Müttern mit noch nicht gehfähigen Kleinkindern das Einkaufen erleichtert werden. Bisher bekannte und für diesen Zweck bestimmte Babyschalen bestehen entweder nur aus dem Schalenkörper oder der Schalenkörper bildet ein Stützgerüst für eine Körperauflage, die einen festen Bestandteil des Schalenkörpers bildet und von diesem nicht entfernt werden kann. Während Babyschalen, die nur aus einem nackten Schalenkörper bestehen, eine relativ kalte Auflage für ein Kleinkind bilden, sind jene Babyschalen, bei denen Schalenkörper und Körperauflage ein Teil bilden, relativ großvolumige Gebilde. Setzt man derart gestaltete Babyschalen in üblicher Weise auf den Korb des Einkaufswagens, so wird die Größe oder Weite der restlich verbliebenen Zugriffsöffnung zum Korb sehr stark reduziert. Es verbleibt nur noch eine geringe Öffnung, durch die man die eingekaufte Ware an der Babyschale vorbei in den Korb des Einkaufswagens legen bzw. aus dem Korb wieder entnehmen kann. Es gilt also, Babyschalen, die eine Verwendung bei Einkaufswagen finden, relativ kleinvolumig zu gestalten, d.h., es scheiden für eine solche Verwendung alle Babyschalen, deren Körperauflagen die Randbereiche des Schalenkörpers umgreifen, ebenso aus wie Babyschalen, deren Schalenkörper und weichere Körperauflage aus einem Stück bestehen. Aufgrund des Standes der Technik könnte man schließlich vorschlagen, an der Körperauflage, wie eingangs erwähnt, aus Kunststoff bestehende Vorsprünge anzubringen, welche schnappschlüssig in Löcher eingreifen könnten, die sich am Schalenkörper befinden. Doch auch diese Lösung brächte Nachteile derart, daß eine solche Ausstattung überdimensioniert ist, da durch einen Säugling keine wechselnden Belastungen auf die Babyschale einwirken und weil das Anbringen von geeigneten Vorsprüngen an der aus weichem und elastischen Material bestehenden Körperauflage sehr teuer wäre. Ferner bliebe die Befürchtung, daß bei mehrmaligem Entfernen der Körperauflage vom Schalenkörper die knopfartigen Vorsprünge aus der weichen Körperauflage ausreißen.

Es ist Aufgabe der Erfindung, eine Babyschale der gattungsgemäßen Art, insbesondere jedoch eine für einen Einkaufswagen bestimmte Babyschale so weiterzuentwickeln, daß jene Merkmale, die beim Stand der Technik als unvorteilhaft, umständlich oder als teuer empfunden werden können, vermieden werden.

Zur Lösung der Aufgabe wird vorgeschlagen, die zum Verbinden der Körperauflage und des Schalenkörpers vorgesehenen Befestigungsmittel durch wenigstens ein Klettverschlußstück zu bilden, wobei ein Teil des Klettverschlußstückes am Schalenkörper und das andere Teil an der Körperauflage vorgesehen ist.

Das wenigstens eine Klettverschlußstück läßt sich in vorteilhafter Weise beim Herstellvorgang des Schalenkörpers oder bevorzugt der Körperauflage in diesen oder in diese unlösbar so einbinden, daß der eine Teil des Klettverschlußstückes unlösbar im Schalenkörper oder in der Körperauflage verbleibt und der andere Teil, der an seinem Rücken mit einer selbsthaftenden Einrichtung, z.B. mit einem Klebeabziehband ausgestattet ist, vom festen Teil abgezogen und mit seinem Kleberücken bevorzugt auf den Schalenkörper oder auf die Körperauflage aufgeklebt werden kann. Dabei ist die Haftkraft zwischen dem Kleberücken und dem Schalenkörper bzw. der Körperauflage größer als die Losreißkraft, die aufgewendet werden muß, wenn die beiden Teile des wenigstens einen Klettverschlußstückes voneinander getrennt werden sollen.
Die Herstellung von derartigen Babyschalen ist billig, da die Klettverschlußstücke nur in geeigneter Länge von Bandmaterial abgeschnitten und beim Herstellvorgang des Schalenkörpers oder der Körperauflage in die Spritzgußmaschine eingelegt, oder im Falle der Verwendung von aus Stoff bestehenden Körperauflagen in diese eingenäht werden müssen. Auch bei mehrmaligem Lösen der Körperauflage vom Schalenkörper reißt das Klettverschlußstück nicht los, da die Verbindung des Klettverwschlußstückes mit dem Schalenkörper sehr großflächig ist. Selbst ein häufiges Waschen oder Reinigen beeinflußt die neue Babyschale in keiner Weise.
Durch die Verwendung von wenigstens einem Klettverschlußstück müssen, um die Körperauflage befestigen zu können, keine Randbereiche der Körperauflage über Randbereiche des Schalenkörpers gezogen werden. Dadurch bleiben solche Babyschalen kleinvolumig, sie tragen nicht auf, so daß bei der Verwendung bei Einkaufswagen die Zugriffsöffnung zum Korb größer ist als beim Stand der Technik. Schließlich können die Körperauflagen und die Schalenkörper farblich unterschiedlich gestaltet werden, so daß vom Aussehen her 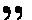 freundliche" Babyschalen entstehen.

Die Erfindung wird anhand eines Ausführungsbeispieles näher beschrieben. Es zeigt
- Fig. 1: eine komplette Babyschale;
- Fig. 2: die Körperauflage mit eingespritztem Klettverschlußstück;
- Fig. 3: ausschnittweise das Zusammenfügen oder Trennen von Schalenkörper und Körperauflage;
- Fig. 4: eine Einzelheit zur Lagefixierung der Körperauflage sowie
- Fig. 5: eine weitere ähnliche Einzelheit mit einer Wasserablauföffnung.

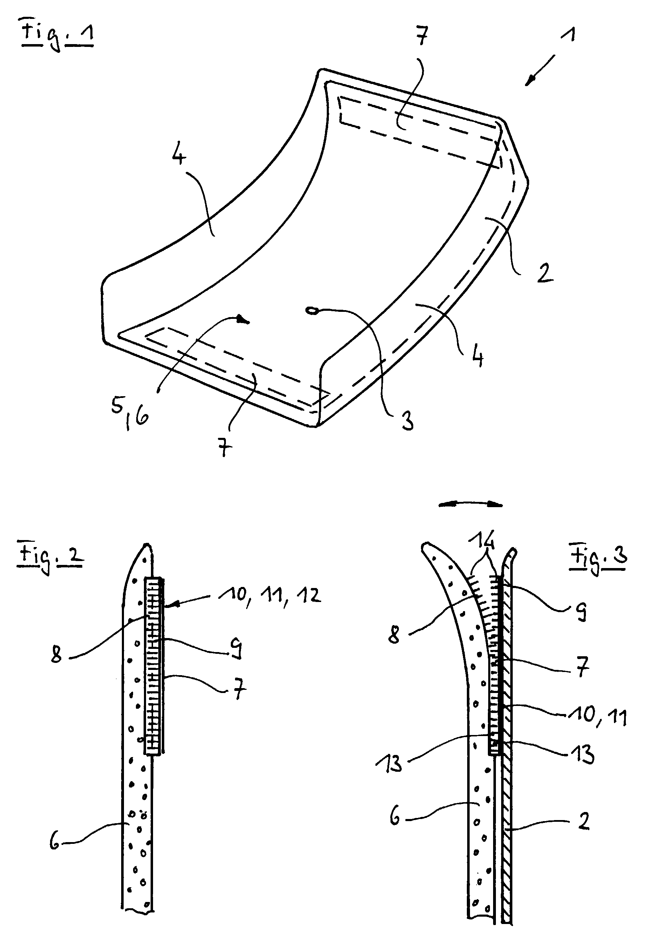

Die in Fig. 1 dargestellte Babyschale 1 weist einen Schalenkörper 2 auf, der in bekannter Weise muldenförmig so gestaltet ist, daß ein noch nicht gehfähiges Kleinkind halb liegend und/oder halb sitzend Platz finden kann. Der Schalenkörper 2 ist aus stabilem Kunststoff geformt. Um dem Kleinkind eine weiche und relativ warme Auflage zu bieten, trägt der Schalenkörper 2 eine aus weichem und bevorzugt porösem Schaumstoff bestehende flexible Körperauflage 6, deren Außenflächen eine glatte stabile Haut aufweisen. Der Schalenkörper 2 und die Körperauflage 6 sind mit Hilfe von wenigstens einem Befestigungsmittel, im Beispiel sind es zwei Klettverschlußstücke 7, miteinander verbunden. Die Babyschale 1 ist gewöhnlich mit einer Sicherheitsguteinrichtung ausgestattet, die jedoch in der Zeichnung weggelassen ist, da sie nicht Bestandteil der Erfindung ist. Am tiefsten Punkt der Babyschale 1 ist ein Durchbruch 3 zum Abfließen von Wasser vorgesehen. Die Körperauflage 6 ist ein elastisches, ebenflächiges Gebilde und bedeckt im Beispiel lediglich die Auflagefläche 5 für das Kleinkind. Die Auflagefläche 5 wird beim Schalenkörper 2 von je einem längs verlaufenden Randabschnitt 4 begrenzt, die dem Kleinkind zusätzlich eine sichere seitliche Abstützung bieten.

Fig. 2 zeigt einen Abschnitt der Körperauflage 6. Das streifenförmige, von einer Rolle abgeschnittene Klettverschlußstück 7 wird beim Herstellvorgang der Körperauflage 6 im Spritzwerkzeug eingelegt und von dem für die Körperauflage 6 vorgesehenen Material so umspritzt, daß der eine Teil 8 des Klettverschlußstückes 7 ortsfest mit der Körperauflage 6 verbunden ist und der andere Teil 9 durch Lösen vom Teil 8 abnehmbar ist. Die freie Rückseite 10 des anderen Teiles 9 ist mit einer selbsthaftenden Einrichtung 11, beispielsweise mit einem Klebeabziehband 12 ausgestattet. Zum Anbringen der Körperauflage 6 an der Auflagefläche 5 des Schalenkörpers 2 wird lediglich das Klebeabziehband 12 von der selbsthaftenden Einrichtung 11 des wenigstens einen Klettverschlußstückes 7 abgezogen und mit der nun frei gewordenen Klebefläche gegen die Auflagefläche 5 gedrückt. Die Haftkraft des Klettverschlußstückes 7 gegenüber dem Schalenkörper 2 ist größer als die Losreißkraft, die angewendet werden muß, wenn die beiden Teile 8, 9 des Klettverschlußstückes 7 getrennt werden sollen.

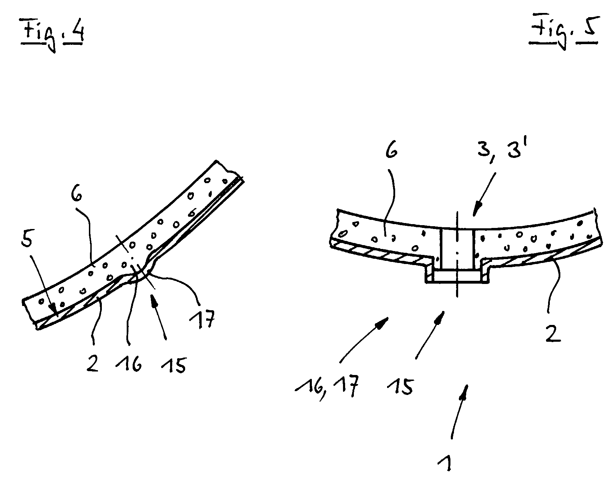

Fig. 3 zeigt, wie die Körperauflage 6 vom Schalenkörper 2 gelöst oder von diesem abgenommen wird. Abschnitte 13 der beiden Teile 8, 9 des Klettverschlußstückes 7 greifen noch ineinander während je ein weiterer Abschnitt 14 bereits getrennt sind bzw. noch zusammengefügt werden. Durch das wenigstens eine Klettverschlußstück 7 ist ein Trennen der Körperauflage 6 vom Schalenkörper 2 auf einfachste Weise ebenso möglich wie ein erneutes Zusammenfügen.

Um die Körperauflage 6 paßgenau auf den Schalenkörper 2 aufsetzen zu können, empfiehlt es sich, wie in Fig. 4 vorgeschlagen, an der Auflagefläche 5 des Schalenkörpers 2 wenigstens zwei Mulden 17 vorzusehen, in welche an der Körperauflage 6 befindliche Erhöhungen 16 eingefügt werden. Der Schalenkörper 2 und die Körperauflage 6 besitzen demnach gemeinsame Konturen 15, die zum gegenseitigen Ineinandergreifen bestimmt sind.

Es ist auch möglich, im Bereich von Mulde 17 und Erhöhung 16, so wie in Fig. 5 gezeigt, je einen Durchbruch 3 am Schalenkörper 2 und an der Körperauflage 6 vorzusehen. Man wird an der tiefsten Stelle der Babyschale 1 mindestens eine derartige Einrichtung in Form gemeinsamer Konturen 15 vorsehen, so daß eine paßgenaue Auflage der Körperauflage 6 sowie wenigstens eine Abschlußöffnung 3' für Wasser gebildet sind.

## Patentansprüche

1. Babyschale (1) mit einem Schalenkörper (2) und mit einer flexiblen Körperauflage (6), die mit Befestigungsmitteln lösbar mit dem Schalenkörper (2) verbunden ist, dadurch **gekennzeichnet,** daß die Befestigungsmittel durch wenigstens ein Klettverschlußstück (7) gebildet sind, wobei ein Teil (9) des Klettverschlußstücks (7) am Schalenkörper (2) und das andere Teil (8) an der Körperauflage (6) vorgesehen ist.

2. Babyschale (1) nach Anspruch 1, dadurch **gekennzeichnet,** daß das wenigstens eine Klettverschlußstück (7) mit seinem einen Teil (8) ortsfest mit der Körperauflage (6) verbunden ist.

3. Babyschale (1) nach Anspruch 1 oder 2, dadurch **gekennzeichnet,** daß die freie Rückseite (10) des Teiles (9) des wenigstens einen Klettverschlußstückes (7) mit einer selbsthaltenden Einrichtung (11) zum Befestigen am Schalenkörper (2) ausgestattet ist.

4. Babyschale (1) nach einem der Ansprüche 1 bis 3, dadurch **gekennzeichnet,** daß die Haftkraft eines jeden Klettverschlußstückes (7) gegenüber dem Schalenkörper (2) größer ist, als die Losreißkraft, die beim Trennen der beiden Teile (8, 9) erforderlich ist.

5. Babyschale (1) nach einem der Ansprüche 1 bis 4, dadurch **gekennzeichnet,** daß die Körperauflage (6) und der Schalenkörper (2) gemeinsame Konturen (15) aufweisen, die zum gegenseitigen Ineinandergreifen bestimmt sind.

6. Babyschale (1) nach einem der Ansprüche 1 bis 5, dadurch **gekennzeichnet,** daß die Babyschale (1) an ihrer tiefsten Stelle wenigstens einen Durchbruch (3) zum Abfließen von Wasser aufweist.

7. Babyschale (1) nach einem der Ansprüche 1 bis 6, dadurch **gekennzeichnet,** daß die Körperauflage (6) aus porösem Schaumstoff gebildet ist und daß die Außenflächen der Körperauflage (6) eine glatte stabile Haut aufweisen.

8. Babyschale (1) nach einem der Ansprüche 1 bis 7, dadurch **gekennzeichnet,** daß die Körperauflage (6) zu beiden Seiten durch je einen am Schalenkörper (2) befindlichen Randabschnitt (4) begrenzt ist.
